# EUROPEAN PATENT APPLICATION

(11) **EP 3 415 573 A1**
(43) Date of publication of application: **19.12.2018**
(21) Application number: 17175627.3
(22) Date of filing: 13.06.2017
(51) Int. Cl.: C09D 101/18, C08B 15/00, C08B 15/04

(54) **COATING COMPOSITION, COATING AND ARTICLE**

(71) Applicant: Koninklijke Philips N.V., 5656 AE Eindhoven (NL)
(72) Inventor: WIELSTRA, Ytsen, 5656 AE Eindhoven (NL)
(74) Representative: de Haan, Poul Erik

(57) **Abstract**

A coating composition is disclosed comprising nitrocellulose and a compound according to Formula I dissolved in an organic solvent: 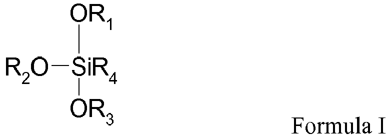 wherein R₁-R₃ are individually selected from C₁-C₆ linear or branched alkyl groups and R₄ is an alkyl group comprising a primary or secondary amine group. Also disclosed are a coating formed from such a coating composition, an article coated with such a coating and a method of coating an article with such a coating.

## Description

### FIELD OF THE INVENTION

The present invention relates to a coating composition for forming a coating on a polymer surface of an article.

The present invention further relates to such a coating.

The present invention further relates to an article coated with such a coating.

The present invention further relates to a method of forming such a coating on a polymer surface of such an article.

### BACKGROUND OF THE INVENTION

Many consumer products are made from polymers (plastics), as such materials allow for the consumer product to be easily formed in its desired shape, for example through molding techniques such as injection molding. Styrene-based polymers such as ABS (acrylonitrile butadiene styrene) are particularly suited for such molding techniques, as it can be easily molded, has excellent mechanical properties and a desirable surface finish in terms of gloss and smoothness

However, a drawback of many of such polymers that can be easily molded (such as ABS) is that the polymers are susceptible to etching by aggressive chemicals, e.g. certain liquids such as acetone and essential oils, which are plant-based oils that give the plant its distinct essence or smell as is well-known. Examples of such essential oils include eucalyptol, menthol, thymol and methyl salicylate. Such essential oils for example may be added to water- or alcohol-based solutions such as mouth washes, perfumes, deodorants, eaus de toilette, household cleaning products and so on, in order to impart a pleasant sensation of freshness on such solutions. Such aggressive chemicals, e.g. acetone or essential oils therefore can deteriorate the surface finish of articles made from such polymers, such as for example containers for retaining the water-based solution, wherein the polymer surface is whitened (etched) by the aggressive chemicals. A particular example of such an article is an oral hygiene apparatus in which the water-based solution is jetted into the oral cavity of its user by a pump within the apparatus.

Equally, the polymer bodies of some articles, e.g. consumer products such as shavers or the like, may be given a particular appearance by application of a coating to the polymer body, e.g. a high-gloss or metallic finish by inclusion of metallic flakes such as aluminum flakes in a coating on its polymer body to give the body a metallic appearance. However, such coatings can also suffer from degradation by such aggressive chemicals, which can deteriorate the appearance of the article onto which the coating is applied.

Such degradation is undesirable from an aesthetic perspective, as the article will start to look worn when the surface finish of the article is degraded by the aggressive chemicals, e.g. acetone or essential oils, either by damaging the polymer or the coating thereon, which may be interpreted by a consumer as the article being of inferior quality, which may prevent the consumer to buy the article again or may cause the consumer to buy it from another manufacturer.

For this reason, so-called 2K polyurethane (PU) coatings commonly are applied to the polymer article to improve its resistance against environmental degradation. However, such coatings have limited resistance against attack by such aggressive chemicals, and are therefore less suited for the protection of polymer articles against such damage. Hence, there exists a need for coatings that can protect such articles from damage by aggressive chemicals, such as for example mouth washes containing essential oils.

### SUMMARY OF THE INVENTION

The present invention seeks to provide a coating composition that can be used to form a coating having such increased resistance to certain aggressive chemicals such as acetone or essential oils.

The present invention further seeks to provide a coating formed from such a coating composition.

The present invention further seeks to provide an article coated with such a coating.

The present invention further seeks to provide a method of coating such an article with such a coating.

According to an aspect, there is provided a coating composition comprising nitrocellulose and a compound according to Formula I dissolved in an organic solvent: 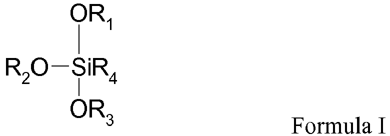 wherein R₁-R₃ are individually selected from C₁-C₆ linear or branched alkyl groups and R₄ is an alkyl group comprising a primary or secondary amine group.

Nitrocellulose coatings, and in particular E-grade nitrocellulose coatings have excellent layer forming properties, which properties can be leveraged to form coatings with a desired surface finish on polymer surfaces such as an ABS surface by way of non-limiting example. However, nitrocellulose coatings are susceptible to damage by aggressive chemicals, such as essential oils and especially acetone. The present invention is based on the insight that nitrocellulose can be cross-linked with the aminosilanes of Formula 1 to dramatically increase the resistance of the coating against such damage, whilst retaining the desirable surface finish of the coating. This is surprising, given that it is commonly assumed that nitrocellulose is incompatible with amines especially when forming coatings, for example due to the clouding of the reaction product between the nitrocellulose and the amines. Without wishing to be bound by theory, it is assumed that the increased resistance is caused by the polycondensation reaction of the aminosilanes, which forms a polysiloxane network chemically (covalently) bound to the nitrocellulose, thereby protecting it from attack by e.g. acetone or essential oils.

In an embodiment, the organic solvent is methoxypropanol or a solvent mixture comprising methoxypropanol and xylene in order to ensure solubility of the solid content and the drying characteristics of the composition to form the coating.

R₁-R₃ may be methyl groups in order to facilitate effective polycondensation of the aminosilanes when bound to the nitrocellulose.

R₄ maybe selected from -(CH₂)ₙNH₂ and -(CH₂)ₚNH(C₂H₄NH)_{q}-(CH₂)ᵣNH₂, wherein n is an integer from 2 to 6, p is an integer from 1 to 3, q is an integer from 0 to 3 and r is an integer from 1 to 3. In particular, where R₄ has the general formula - (CH₂)ₚNH(C₂H₄NH)_{q}-(CH₂)ᵣNH₂ it has been found that the resistance of the coating is further improved compared to where R₄ has the general formula -(CH₂)ₙNH₂, especially where the coating is formed under identical drying conditions.

The coating composition may further comprise a compound according to Formula 2 dissolved in the organic solvent: 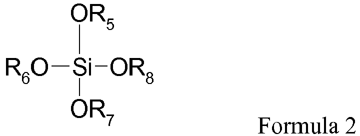 wherein R₅-R₈ are individually selected from C₁-C₃ linear or branched alkyl groups. For example, the compound of Formula 2 may be tetramethyl-orthosilicate (TMOS). The addition of such quaternary alkoxy-substituted silanes further increases the resistance of the coating against water exposure, in particular when a weight ratio between the compound of Formula 1 and the compound of Formula 2 in the coating composition ranges from 1:2 to 2:1. Without wishing to be bound by theory, it is assumed that the inclusion of such quaternary alkoxy-substituted silanes increases the density of the polysiloxane network, thereby providing the improved resistance.

However, it should be understood that such increased resistance of the coating against water damage equally may be achieved by the composition further comprising a metal alkoxide dissolved in the organic solvent, wherein the metal is selected from aluminum, zirconium or titanium, or by the solid content comprising a mixture of the compound of Formula 2 and such a metal alkoxide, or by the coating composition further comprising an organically modified silane compound according to formula 3 dissolved in the organic solvent, wherein R₉-R₁₁ are individually selected from C₁-C₃ linear or branched alkyl groups and R₁₂ is an alkyl group substituted with an epoxy group, an isocyanate group, a (meth)acrylate group or a fluorine group. The R₁₂ alkyl group preferably is a C₁-C₆ linear or branched alkyl group.

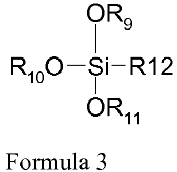

Preferably, the nitrocellulose has a nitrogen content of between 10-14%, more preferably between 11.5-12.5% and the compound of Formula 1 is present in an amount of 0.25 - 1.5 equivalents relative to said nitrogen content (depending on the amine content in the R₄ substituent of the compound of Formula 1) in order to impart particularly desirable resistance towards aggressive chemicals onto the coating formed from such a composition.

The coating composition may further comprise a plurality of aluminum flakes to give a surface coated with a coating formed from the coating composition a metallic or mirror-like appearance whilst retaining the resistance properties of the coating.

According to yet another aspect, there is provided a coating formed from the coating composition of any of the herein described embodiments, wherein the coating comprises a crosslinking product of nitrocellulose with the compound of Formula 1. Without wishing to be bound by theory, it is postulated that such a crosslinking product includes a plurality of imine groups, each formed by hydrolysis of a nitrate group of the nitrocellulose into a ketone, aldehyde or alcohol group and a reaction between the ketone or aldehyde and the amine group of the compound of Formula 1, as has been demonstrated from the formation of a resonance peak in the ¹³C NMR spectrum of the reaction product indicative of an imine bond and a reduction in intensity of the NO₂ vibrations in the FT-IR spectrum of the reaction product, which is indicative of some of the NO₂ groups of the nitrocellulose having been consumed by the cross-linking reaction with the aminosilanes.

According to another aspect, there is provided an article comprising a surface coated with the coating according to any embodiment of the present invention. Such an article has a higher resistance towards damage from aggressive chemicals e.g. acetone or essential oils, thereby protecting the surface properties of the surface, e.g. of a body and/or a container for containing a liquid.

The article may be a domestic appliance such as an oral healthcare appliance or an electric shaver, as such appliances can come into contact with aggressive chemicals such as acetone or essential oils, such that the appearance of the domestic appliance is protected by the coating according to embodiments of the present invention.

The surface in some embodiments may be a polymer surface optionally comprising a styrene based polymer such as acrylonitrile butadiene styrene (ABS), as such polymers are particularly suitable for molding the article, e.g. through injection molding.

According to a further aspect, there is provided a method of forming a coating on a surface, the method comprising depositing the coating composition of any of the herein described embodiments on said surface; and drying the coating composition to form the coating. This allows for the coating to be formed in a straightforward and quick manner, e.g. within several minutes, whilst the drying step can be performed below the softening point of a polymer, for example at a temperature of around 80°C, in case of the surface being a polymer surface.

### BRIEF DESCRIPTION OF THE DRAWINGS

Embodiments of the invention are described in more detail and by way of non-limiting examples with reference to the accompanying drawings, wherein:
Fig. 1 schematically depicts an oral healthcare article according to an example embodiment;
Fig. 2 is a proposed reaction scheme for the formation of an intermediate product of the coating according to an embodiment of the present invention;
Fig.3 is a proposed reaction scheme for the formation of part of a final product of the coating according to an embodiment of the present invention;
Fig. 4 is a ¹³C NMR spectrum of a reaction product of a model coating composition representative of embodiments of the present invention; and
Fig. 5 depicts superimposed FT-IR spectra indicating the impact of the formation of example coatings of the present invention on the NO₂ vibrations in the FT-IR spectrum of nitrocellulose.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

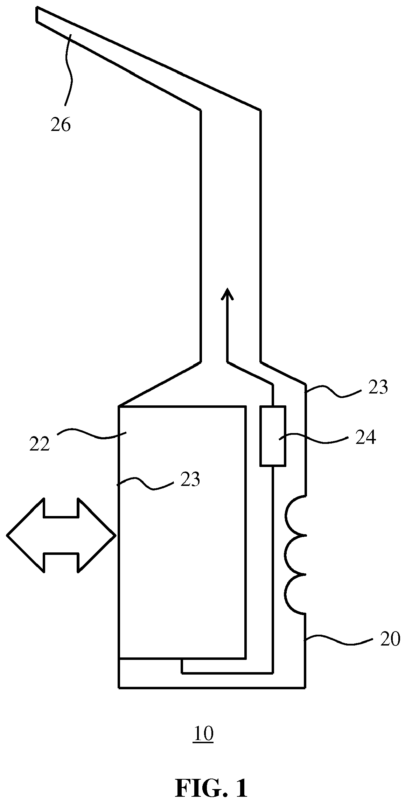

Fig. 1 schematically depicts an article 10 according to an example embodiment of the present invention, here an oral healthcare appliance for interdental hygiene through the generation of a jet of water though a nozzle 26, which jet of water is formed by a pump 24 pumping water from a reservoir 22 through the nozzle 26. The reservoir 22 may be removable from the body 21 of the article 10 as indicated by the block arrow, e.g. for refilling the reservoir 22 with water, although this is not necessary. It is equally feasible to provide an article 10 in which the reservoir 22 may be refilled through a fill inlet (not shown) integral to the article 10, in which case the reservoir 22 may not be removable from the body 21 of the article 10.

The article 10 contains one or more polymer surfaces. For example, the body 21 of the article 10 may be a polymer body made by (injection) molding, the article 10 may contain a polymer container 22 for containing a fluid such as water, in the example shown in Fig. 1 to generate a water jet for interdental cleaning as explained above, and so on. The article 10 is not necessarily an oral healthcare apparatus such as an interdental cleaning device. The article 10 alternatively may be any other type of appliance, e.g. another type of oral healthcare appliance or a grooming appliance such as an electric shaver, trimmer or the like, or more generally any appliance or other article that has a polymer surface such as a polymer body that is likely to come into contact with water or water-or alcohol-based solutions containing essential oils, for instance because the article is likely to be used in a bathroom or the like in which such fluids are commonly used, or because the article 10 is likely to be cleaned with a cleaning product containing such essential oils. Similarly, the polymer surfaces of the article 10 may be exposed to (accidental) contact with aggressive chemicals such as acetone for example.

In the context of the present application, essential oils are plant-based oils that give or contribute to give that plant its characteristic scent (essence), e.g. eucalyptol, menthol, thymol, linaool, borneol, methyl salicylate, terpenes, and so on.

Furthermore, in the context of the present application, polymers used in the article 10 may be any polymer that facilitate the manufacture of the polymer body 20 and/or the polymer container 22, e.g. through a molding process such as injection molding. Examples of such polymers include polycarbonate, poly (methyl methacrylate) and styrene-based polymers such as ABS, with such styrene-based polymers and in particular ABS being specially mentioned as such polymers are particularly susceptible to damage from aggressive chemicals such as acetone and essential oils. In fact, it has been demonstrated that watery solutions containing less than 1% by weight of such essential oils, e.g. as little is 0.1% by weight, could damage ABS, causing whitening of the polymer thereby degrading its appearance, which shows the potency of the corrosive nature of such essential oils when brought into contact with polymers such as ABS.

In order to protect surfaces such as the polymer surfaces of the article 10 at risk of being exposed to such essential oils, such surfaces are coated with a coating 23 in accordance with the present invention. Such a coating 23 may be applied to the external surface of the polymer body 20 and/or to at least one of the external and internal surfaces of the container 22 if present in the article 10. The coating 23 may be formed on such polymer surfaces of the article 10 by applying a coating composition to these surfaces and drying the coating composition to form the coating 23 as will be explained in more detail below. Such a drying step typically is performed at temperatures below the softening point of the polymer to which surface the coating composition is applied, for example a temperature in a range of 50-100°C for a period of time of 1-10 minutes. In an embodiment, the coating composition is dried at about 80°C for a period of 1-5 minutes to evaporate the solvent from the coating composition and to react the reagents in the coating composition to form the coating 23. However, it is noted for the avoidance of doubt that the coatings according to the embodiments of the present invention are not limited to being applied to polymer surfaces but may be applied to any surface that benefits from being protected from exposure to the aforementioned aggressive chemicals.

In an embodiment, the coating composition comprises solid content dissolved in an organic solvent, the solid content comprising nitrocellulose and a compound according to Formula I: 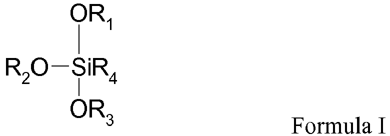 wherein R₁-R₃ are individually selected from C₁-C₆ linear or branched alkyl groups and R₄ is an alkyl group comprising a primary or secondary amine group. The nitrocellulose preferably has a nitrogen content of between 10-14%, which corresponds to an average degree of substitution of the hydroxyl groups of the cellulose with nitrate groups of 1.7 - 2.9 per (glucose) unit of the cellulose. A particularly suitable type of cellulose is so-called E-grade cellulose, which has a nitrogen content of 11.8-12.3% and a degree of substitution of 2.20-2.35, and is commercially available from several suppliers, such as the Dow Wolff Cellulosics company under the tradename Walsroder Nitrocellulose or from the Synthesia company. It has been found that in particular E-grade nitrocellulose forms coatings with excellent layer forming properties, whilst showing increased resistance to e.g. alcohols compared to A-grade and AM-grade nitrocellulose having lower nitrogen contents than E-grade nitrocellulose.

The organic solvent in the chemical composition may be any suitable organic solvent that is inert to the solid content to be dissolved therein and that readily evaporates at the drying temperatures at which the coating 23 is formed, e.g. at temperatures in a range of 50-100°C. In the examples described below, methoxypropanol was used as the primary organic solvent, with the coating composition being further diluted with xylene to improve adhesion characteristics, but it should be understood that this is by way of non-limiting example only and that the skilled person will have no difficulty whatsoever to find alternative organic solvents that are equally suitable for the formation of the coating composition. It is well-known per se that nitrocellulose, and in particularly E-grade nitrocellulose can be dissolved in a number of solvents including glycol ethers, ethers and so on, and any of these solvents may be contemplated for use in the coating composition based on their volatility.

The alkoxysilane according to Formula 1 is present in the coating composition such that upon drying of the coating composition the primary or secondary amine group of the R₄ moiety reacts with a nitrate group of the nitrocellulose in the coating composition, whilst the R₁-R₃ alkoxy groups may be hydrolysed in a polycondensation reaction to form a polysiloxane network in what is sometimes referred to as a sol-gel reaction, in which a solution is converted into a (rigid) gel or solid by such a polycondensation reaction. Such a polysiloxane network typically is formed by silane molecules of Formula 1 that are covalently bound to the nitrocellulose through reaction between their primary or secondary amine group with a nitrate group of the nitrocellulose as well as by unbound silane molecules. In this manner, a coating 23 can be formed in which the nitrocellulose is anchored to the polysiloxane network, thereby increasing the chemical resistance of the coating 23 compared to a nitrocellulose coating for example.

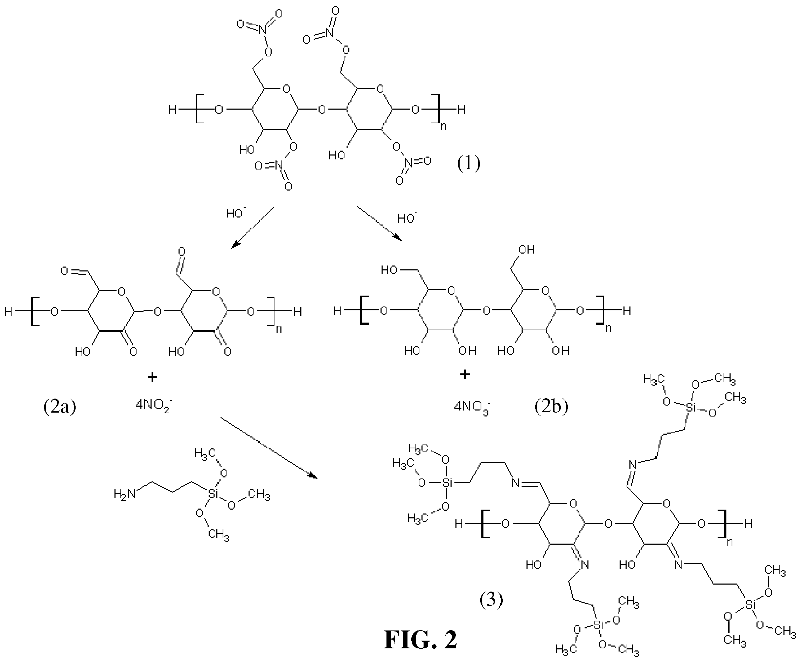

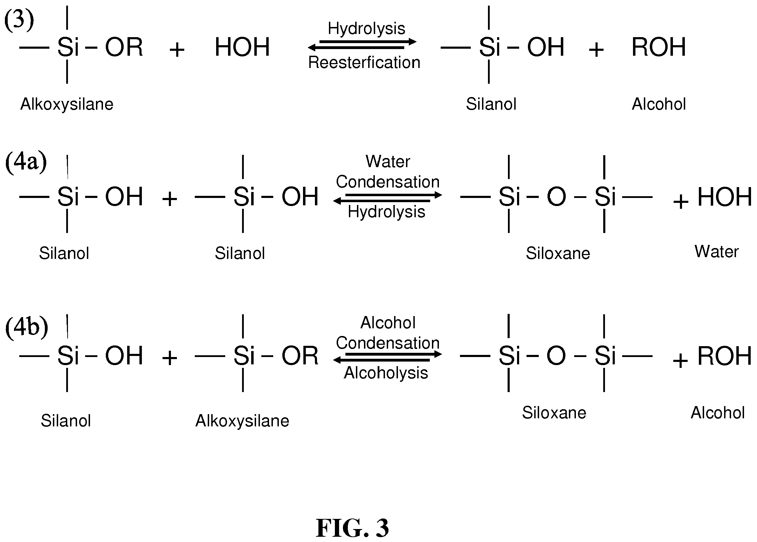

The chemistry of the coating 23 will now be discussed in more detail with the aid of Fig. 2, in which a reaction mechanism for the anchoring of the alkoxysilanes of Formula 1 to the nitrocellulose is proposed, and Fig. 3, in which the sol-gel chemistry of the formation of a polysiloxane network is explained in more detail. Fig. 2 depicts a reaction scheme for the reaction of nitrocellulose with an amine-functionalized alkoxysilane, here aminopropyl-trimethoxysilane (R₁-R₃ = CH₃, R₄ = CH₂CH₂CH₂NH₂ in Formula 1). Under base catalysis, the nitrate groups of the nitrocellulose (1) maybe simultaneously hydrolysed into keto-functionalized cellulose (2a) and cellulose (2b) as for instance reported by C. Christodoulatos et al. in Water Environ. Res. 2001, Mar-Apr.; 73(2), pages 185-191 under release of nitrite and nitrate ions from the nitrocellulose (1). The base may be provided by the amine-functionalized alkoxysilane of Formula 1. Subsequently, the amine group of the amine-functionalized alkoxysilane of Formula 1 may react with the keto-functionalized cellulose (2a)) to form the intermediate product (3) in which the amine group of the amine-functionalized alkoxysilane of Formula 1 is converted into an imine group by reaction with a ketone or aldehyde group of the keto-functionalized cellulose (2a) This has been corroborated by ¹³C NMR, in which after this reaction the NMR spectrum of a solution including the reaction product contained a resonance peak characteristic of an imine carbon atom as well as by FT-IR, which showed a clear reduction in the intensity of the NO₂ (stretch) vibrations upon completion of the coating forming reaction.

The amine-functionalized alkoxysilane of Formula 1 preferably is present in the coating composition an amount of 0.5 - 1 equivalent based on the nitrogen content of the nitrocellulose, i.e. the number of nitrate groups in the nitrocellulose in order to achieve the formation of such an imine function group upon hydrolysis of the nitrocellulose. That is, one amine-functionalized alkoxysilane molecule of Formula 1 is present per 1-2 nitrate groups of the total nitrocellulose content in the coating composition. If the inorganic fraction in the coating composition is higher than this, the coating 23 may not have the desired surface properties, whereas if the inorganic fraction in the coating composition is lower than this, the coating 23 may not have the desired resistance against aggressive chemicals such as acetone or essential oils.

The alkoxy substituents of the amine-functionalized alkoxysilane of Formula 1 in the meantime may engage in the formation of a polysiloxane network, as schematically depicted in Fig. 3. Such a polysiloxane network may include the intermediate imine-coupled product (3) as well as unbound amine-functionalized alkoxysilanes of Formula 1, and typically involves the hydrolysis of some of the alkoxy groups in these molecules, after which a water condensation reaction (4a) or an alcohol condensation reaction (4b) lead to the formation of the cross-linked inorganic polysiloxane network. The degree of crosslinking can be controlled by appropriate choice of the alkoxysilanes, pH, reaction temperature, water ratio and co-solvents.

For example, in addition to the amine-functionalized alkoxysilane of Formula 1, the coating composition may further comprise a tetraalkoxysilane according to Formula 2:

### Formula 2:

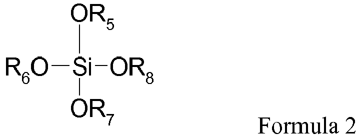

wherein R₅-R₈ are individually selected from C₁-C₃ linear or branched alkyl groups and preferably are methyl groups. It has been found that the presence of the compound of Formula 2 increases the resistance of the coating 23 against water. This can be understood from the fact that when forming the polysiloxane network, the compound of Formula 2 facilitates a high density of such a network owing to the fact that this compound has four hydrolysable alkoxy groups as opposed to 3 hydrolysable alkoxy groups in the amine-functionalized alkoxysilane of Formula 1 such that a higher cross-linking density can be achieved in the polysiloxane network to which this higher resistance is contributed. In a preferred embodiment in which the tetra-alkoxy silane compound of Formula 2 is present, a weight ratio between the compound of Formula 1 and the compound of Formula 2 in the coating composition ranges from 1:2 to 2:1 in order to ensure the desired resistance of the coating 23 against water whilst retaining the layer forming characteristics of the coating composition.

It should be understood that the properties of the polysiloxane network may be tuned by the addition of other types of silanes in addition or as an alternative to the silanes of Formula 2. For example, such properties equally may be tuned by the addition of other types of organically modified silanes, e.g glycidyloxypropyltrimethoxysilane (Glymo), or more generally, organically modified silanes according to Formula 3:

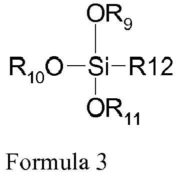

In Formula 3, R₉-R₁₁ are individually selected from C₁-C₃ linear or branched alkyl groups and R₁₂ is an alkyl group substituted with an epoxy group, an isocyanate group, a (meth)acrylate group or a fluorine group. The R₁₂ alkyl group maybe a C₁-C₆ linear or branched alkyl group.

Alternatively, or additionally, the crosslinking density of the polysiloxane network can be tuned by the addition of a metal alkoxide to the coating composition, such as an aluminum alkoxide, a zirconium alkoxide or a titanium alkoxide, or combinations thereof. The alkoxide may be a C₁-C₆ linear or branched alkoxide. Such metal alkoxides may be added to the coating composition as a chelate in order to suppress their reactivity. The reaction of such a chelate with silanes leads to the formation of a metal silicate, e.g. aluminum silicate in case of an aluminum alkoxide chelate.

In some embodiments of the coating composition, the amine-functionalized alkoxysilane of Formula 1 comprises a R₄ substituent selected from-(CH2)ₙNH₂ and-(CH₂)ₚNH(C₂H₄NH)_{q}-(CH₂)ᵣNH₂, wherein n is an integer from 2 to 6, p is an integer from 1 to 3, q is an integer from 0 to 3 and r is an integer from 1 to 3. The integer n may be 2, 3, 4, 5 or 6. The integer p may be 1, 2 or 3, the integer q may be 0, 1, 2 or 3 and the integer r may be 1, 2 or 3. Any combination of these discrete values of n, p, q and r are intended to be covered by the scope of the present invention.

Of these substituents, (CH₂)ₚNH(C₂H₄NH)_{q}-(CH₂)ᵣNH₂ is particularly preferred as the amine-functionalized alkoxysilanes of Formula 1 including this substituent give the desired resistance of the coating 23 at shorter drying times of the coating composition after application on the polymer surface of the article 10 compared to the amine-functionalized alkoxysilanes of Formula 1 in which R₄ = -(CH₂)ₙNH₂.

The coating composition may further include additives that do not partake in the formation of the cross-linking product but may be added to alter the appearance of the coating formed from such a coating composition. For example, pigments, dyes and/or fillers may be added to color the coating. In a particular embodiment, aluminum flakes may be added to the coating composition to give the resultant coating a mirror-like or metallic appearance. Such aluminum flakes may be made in any suitable manner, e.g. through a deposition technique such as PVD to obtain particularly thin flakes in order to increase reflectance of the coating.

The present invention will now be explained in more detail with the aid of the following examples. It should be understood that these examples are for illustrative purposes only and are not intended to limit the scope of the claimed invention.

### Starting materials

E-grade Nitrocellulose (NC) E34 damped with 30% isopropyl alcohol (IPA) was obtained from Synthesia and used as provided. NC E34 contains about 12% N such that an average of about 2.5 OH groups per D-glucose unit of the D-glucose units in the cellulose is substituted with a nitrate group.

Aminopropyltrimethoxysilane (Ameo),
[trimethoxysilypropyl]ethylenediamine (Ameo*) and
[trimethoxysilylpropyl]diethylenetriamine (Ameo**) as well as diethylenetriamine (DETA) were obtained from Sigma-Aldrich and used as provided.

1-Methoxy-2-propanol and Xylene (mixture of isomers) were obtained from Sigma Aldrich and used as provided.

Tetramethoxysilane, aluminum tri sec-butoxide and ethylacetoacetate were also obtained from Sigma Aldrich.

A polymer substrate used for testing was made from a polyamide (PA)/ABS blend obtained from Ineos Styrolution (Terblend N).

### Preparation Example

A stock solution of NC E34 was made by dissolving it in methoxypropanol at 12.5% giving a solution with 8.75% solid content (NC) by weight based on the total weight of the stock solution.

### Testing method

The coatings and the underlying polymer substrate in the following examples were tested for resistance towards degradation (dissolving) by acetone and water. Resistance towards acetone was tested by gentle rubbing the coatings after curing with a cloth soaked into acetone and observing visual changes.

Resistance towards water was done by soaking coated samples in water for 1 night and observing visual and mechanical change by rubbing.

### Reference Example

8.5g stock solution was diluted with additional 8g methoxypropanol and 12g Xylene. Xylene was added to ensure a good adhesion of the coating composition to the PA/ABS substrate surface. The resulting composition (lacquer) was sprayed onto the substrate surface. After spraying, the lacquer layer on the substrate surface was dried in the oven for 2 min at 80°C to form the NC coating on the polymer substrate after which the dried layer was tested for resistance towards acetone. It was found that the dried layer was easily removed with acetone. Prolonged drying did not improve the resistance of the NC coating towards acetone.

### Example 1

0.68g Ameo (0.5 equivalents) was added to the diluted stock solution described in the reference example, and dried accordingly. The resulting coating showed a marked improvement in the resistance towards acetone but could still be removed. Increasing the amount of Ameo in the diluted stock solution to 1g (0.75 equivalents) or 1.36g (1 equivalent) did not further improve this resistance. It was found that by increasing the drying time of the lacquer layer on the substrate surface to 4 min at 80°C increased the resistance towards acetone to satisfactorily levels. On the other hand, lowering the amount of Ameo to 0.34gr (0.25 equivalents) in the diluted stock solution did not yield a coating with acetone resistance even when the lacquer layer was dried for 4 min at 80°C, thus demonstrating the need for at least 0.5 equivalents of amine-functionalized alkoxysilane based on the nitrogen content of the nitrocellulose in the coating composition.

### Example 2

Example 1 was repeated with Ameo* instead of Ameo. The same molar amounts of Ameo* were used as were used in Example 1 for Ameo (0.84g /1.26g/1.68g Ameo*). It was found that complete acetone resistance was obtained after 2 minutes of drying at 80°C for the coating compositions comprising 0.75 and 1 equivalents of the Ameo*, whereas for the 0.5 equivalent Ameo* experiment some resistance was achieved. However, when drying the lacquer layers for 4 min at 80°C all three samples passing the acetone rubbing test. This seems to suggest that increased amine functionality in the R₄ group of the amine-functionalized alkoxysilane of Formula 1 improves the acetone resistance of the coating 23. As with example 1, lowering the amount of Ameo* in the coating composition to 0.42g (0.25 equivalents) showed only moderate resistance towards acetone of the thus formed coating after drying the lacquer layer for 4 min at 80°C, whereas further lowering the Ameo* content to 0.21gr (0.125 equivalents) did not show any resistance towards acetone of the thus formed coating, even after drying the lacquer layer for 4 min at 80°C.

### Example 3

Example 1 was repeated with Ameo** instead of Ameo. The same molar amounts of Ameo** were used as were used in Example 1 for Ameo (1.0g/1.5g/2.0g Ameo**). The coatings formed from these coating compositions all showed good resistance towards acetone after drying the lacquer layers only for 2 min at 80°C. In this case, lowering the Ameo** content in the coating composition to 0.25 equivalents (0.5g) still yielded good resistance of the coating towards acetone both after 2 and 4 minutes drying of the lacquer layer at 80°C. However, when further lowering the amount of Ameo** in the coating composition to 0.25g (0.125 equivalents), the resulting coating showed no resistance towards acetone both after 2 and 4 minutes of drying the lacquer layer at 80°C.

In all samples described in examples 1-3, the resulting coatings had a clear (transparent) appearance. It is noted that the coating composition of Example 3 comprising 2.0g Ameo** resulted in a moderately hygroscopic coating, as demonstrated by softening of the coating layer after soaking the layer in water overnight. It was found that the hygroscopic nature of the coating layer may be suppressed by increasing the inorganic fraction of the coating composition with the tetraalkoxysilanes of Formula 2 or with metal alkoxides as will be demonstrated by the following examples.

### Example 4

To the coating composition of Example 3 with 2.0g Ameo** was further added 0.5g TMOS (molar ratio Ameo**/TMOS = 2/1) after which the coating was prepared as in Example 3. The resulting coating showed the same acetone resistance as in Example 3 but strongly improved water resistance with only minor softening being observed. The softening could be eliminated by increasing the TMOS content in the coating composition to 1.0g (molar ratio Ameo**/TMOS =1/1).

It has furthermore been investigated if metal alkoxides such as aluminum alkoxides can increase the resistance of the coatings of the present invention against water, e.g. by promoting the cross-linking of the polysiloxane network of the coating, as explained in more detail above with the aid of Fig. 3. Such metal alkoxides are highly reactive in pure form, such that they preferably are added as a chelate to moderate their reactivity. Such chelates for example may be formed by reacting the alkoxides with compounds such as ethylacetaoacetate (EAA).

### Example 5

Aluminum tris sec-butoxide with 1 equivalent of ethylacetoacetate were mixed to form a chelate (AlEAA). To the coating composition of Example 3 with 2g Ameo** a single drop of AlEAA (0.02g) was added after which the coating was formed as described in example 3. The resulting coating showed excellent acetone resistance and strongly improved water resistance, with only minor softening of the coating layer after soaking overnight in water. This minor softening could be eliminated by increasing the amount of AlEAA in the coating composition to 0.04g, thereby demonstrating that the inclusion of the metal alkoxide in the polysiloxane network promoted the cross-linking density in the polysiloxane network, thereby improving the resistance towards water (i.e. reducing the hygroscopic nature) of the coating layer.

### Example 6

To the coating composition of Example 3 with 2g Ameo** was further adding 1 drop (0.02g) AlEAA and 0.5g TMOS after which the coating layer was formed as described in Example 3. The resulting coating showed excellent acetone resistance as well as water resistance was now good. This demonstrates the synergistic effect of the metal alkoxide complex with the tetraalkoxy-substituted silanes of Formula 2 in forming a dense and hydrophobic (aluminum) silicate, i.e. polysiloxane, network.

As with the coatings of Examples 1-3, the coatings of Examples 4-6 had a clear (transparent) appearance.

### Example 7

The acetone resistant coatings in examples 1-6 were soaked overnight in Listerine Original Mouthwash as manufactured and distributed by the Johnson and Johnson corporation. Listerine Original Mouthwash was chosen for the essential oils present in this mouthwash. It was found that the acetone resistant coatings in examples 1-6 proved to be resistant to the mouthwash, whilst at the same time protecting the underlying polymer substrate from whitening.

### Comparative example 1

Example 1 was repeated with DETA instead of Ameo added to the diluted stock solution at 0.25 equivalents and 1 equivalent respectively. The resulting coatings after 4 minutes of drying of the lacquer layer at 80°C resulted in for the 1 equivalent sample in a white layer with no mechanical strength, which could be also easily removed by acetone. In the 0.25 equivalent sample, the coating layer was hazy but with improved mechanical strength. However, the resultant coating layer also failed to pass the acetone rubbing test. Replacing acetone by less aggressive butyl acetate showed that DETA did in fact improve the chemical resistance of the layer as the resulting coatings were resistant towards rubbing with butyl acetate whilst native NC can be dissolved in butyl acetate.

This demonstrates that the additional resistance of the coatings of examples 1-3 towards aggressive solvents such as acetone is likely to be provided by the polysiloxane network formed in these coatings, whereas the amino-functionalized silanes prevent the phase separation believed to be responsible for the hazy appearance of the coatings in Comparative Example 1, as it is well-known per se that such phase separation can occur when reacting organic amines with NC.

### Comparative example 2

To compare the coatings of the present invention with 2K polyurethane (PU) coatings, the following experiment was conducted. To the lacquer layer of Reference Example 1, 0.65 gr Desmodur N75 as obtained from the Covestro Corporation was added. After drying the resultant layer for 2 and 4 min at 80°C, the resulting coating could be easily removed by both acetone and butyl acetate. Leaving the samples standing overnight to allow for further curing did not improve the chemical resistance of the coating.

Similar results were obtained with a 2K lacquer based on polyacrylate and isocyanate hardener. The layer was still wet after drying for 2 min at 80°C showing the superior drying speed of the coating compositions of the present invention. The 2K lacquer was dry after 20 minutes of drying at 80°C but still showed sensitivity towards acetone. In fact, after 3 days of drying at room temperature, the acetone resistance of the 2K coating was fair, although still some sensitivity towards acetone could still be observed.

### ¹³C spectroscopy experiment

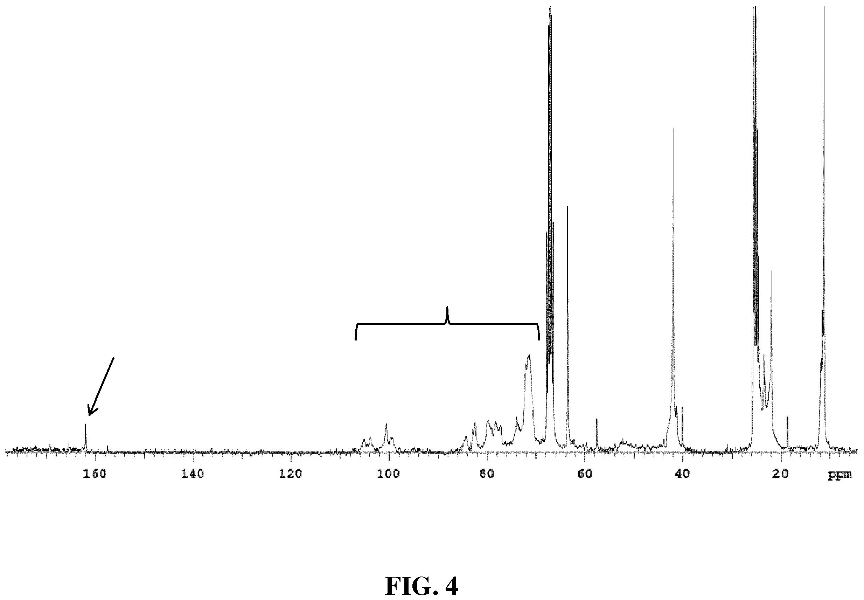

NC and propylamine were dissolved in d8-THF. Propylamine was chosen as it is a simpler molecule than the silanes preventing the ¹³C NMR spectrum from becoming overcrowded. A ¹³C NMR spectrum was recorded on a 300 MHz Varian Mercury Spectrometer 1 hr after dissolving the NC and propylamine in d8-THF. This spectrum is shown in Fig. 4. The signals at 25 and 67 ppm can be contributed to the d8-THF, whereas the signals at 26 and 63.8 ppm can be attributed to the isopropyl alcohol used to dampen the NC. The characteristic signals of the propylamine can be found at 10.6, 21 and 41 ppm. The signals attributable to NC can be found in the range of 70-105 ppm and are highlighted with a bracket. The peak at 162 ppm highlighted with the arrow is typical of carbon atoms in an imine functional group. As expected for polymeric compounds, these signals are rather broad due to the more restricted relaxation freedom in the polymer chain.

This therefore clearly suggests the formation of an imine functionality in the reaction product of NC and propylamine, thereby supporting the proposed reaction mechanism of Fig. 2.

### IR spectroscopy experiment

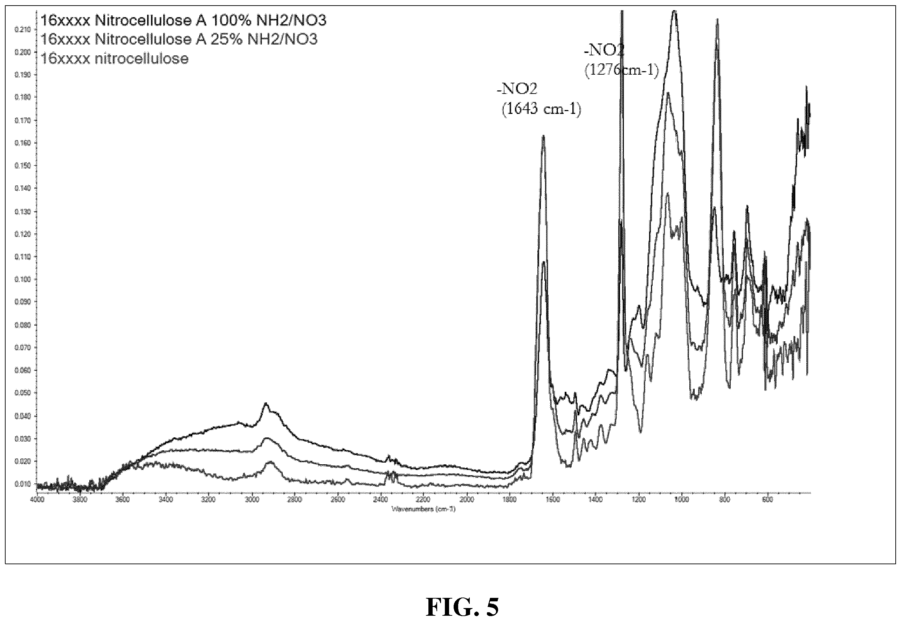

A standard solution of NC was mixed with different amounts of Ameo (0.25 equivalent, 1 equivalent based on the nitrate content of the NC). The mixture sprayed on a glass plate and dried at 80°C. An FT-IR spectrum of the resulting coatings were recorded, and the results are shown in Fig. 5. It can be seen that the IR spectrum of the coating containing 0.25 equivalents of Ameo only exhibited a small reduction of the typical nitrate bands of the NC in the FT-IR spectrum at 1643 and 1276 cm-1. However, increasing the amount of Ameo to 1 equivalent showed a clear reduction of the nitrate groups, which further supports the proposed reaction mechanism of Fig. 2 as the basic hydrolysis of the nitrocellulose would explain the reduction in the intensity of the vibrations associated with the nitrate groups of the NC.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A coating composition comprising nitrocellulose and a compound according to Formula I dissolved in an organic solvent: 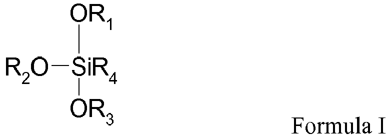 wherein R₁-R₃ are individually selected from C₁-C₆ linear or branched alkyl groups and R₄ is an alkyl group comprising a primary or secondary amine group.

2. The coating composition of claim 1, wherein the organic solvent is methoxypropanol or a solvent mixture comprising methoxypropanol and xylene.

3. The coating composition of claim 1 or 2, wherein R₁-R₃ are methyl groups.

4. The coating composition of any of claims 1-3, wherein R₄ is selected from
-(CH₂)ₙNH₂ and -(CH₂)ₚNH(C₂H₄NH)_{q}-(CH₂)ᵣNH₂, wherein n is an integer from 2 to 6, p is an integer from 1 to 3, q is an integer from 0 to 3 and r is an integer from 1 to 3.

5. The coating composition of any of claims 1-4, further comprising a compound according to Formula 2 dissolved in the organic solvent: 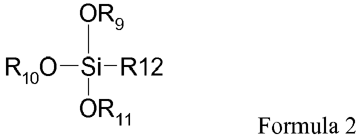 wherein R₅-R₈ are individually selected from C₁-C₃ linear or branched alkyl groups.

6. The coating composition of claim 5, wherein a weight ratio between the compound of Formula 1 and the compound of Formula 2 in the coating composition ranges from 1:2 to 2:1.

7. The coating composition of any of claims 1-6, further comprising a metal alkoxide dissolved in the organic solvent, wherein the metal is selected from aluminum, zirconium or titanium.

8. The coating composition of any of claims 1-6, further comprising an organically modified silane compound according to formula 3 dissolved in the organic solvent, wherein R₉-R₁₁ are individually selected from C₁-C₃ linear or branched alkyl groups and R₁₂ is an alkyl group substituted with an epoxy group, an isocyanate group, a (meth)acrylate group or a fluorine group.

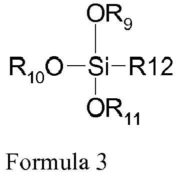

9. The coating composition of any of claims 1-8, wherein the nitrocellulose has a nitrogen content of between 10-14% and the compound of Formula 1 is present in an amount of 0.25 - 1.5 equivalent relative to said nitrogen content.

10. A coating (23) formed from the coating composition of any of claims 1-9, wherein the coating comprises a crosslinking product of nitrocellulose with the compound of Formula 1.

11. The coating of claim 10, wherein said crosslinking product including a plurality of imine groups, each formed by hydrolysis of a nitrate group of the nitrocellulose into a ketone or aldehyde group and a reaction between the ketone or aldehyde group and the amine group of the compound of Formula 1.

12. An article (10) comprising a surface coated with the coating (23) of claim 10 or 11.

13. The article (10) of claim 12, wherein the surface is an inner surface of a container (22) for retaining a liquid or an outer surface of a body.

14. The article of claim 12 or 13, wherein the surface is a polymer surface, optionally wherein the polymer surface comprises a styrene based polymer such as acrylonitrile butadiene styrene (ABS).

15. A method of forming a coating (23) on a surface, the method comprising:
depositing the coating composition of any of claims 1-9 of said surface; and
drying the coating composition to form the coating of claims 10 or 11.
